# EUROPEAN PATENT APPLICATION

(11) **EP 2 775 424 A2**
(43) Date of publication of application: **10.09.2014**
(21) Application number: 14158101.7
(22) Date of filing: 06.03.2014
(51) Int. Cl.: G06K 9/00, G06K 9/22

(54) **Method for providing augmented reality, machine-readable storage medium, and portable terminal**

(30) Priority: 08.03.2013 KR 20130025186
(71) Applicant: Samsung Electronics Co., Ltd., Suwon-si Gyeonggi-do 443-742 (KR)
(72) Inventor: Cho, Ik-Hwan, 443-742 Gyeonggi-do (KR)
(74) Representative: Birchenough, Lewis

(57) **Abstract**

A method for providing Augmented Reality (AR) is provided. The method includes acquiring an image, sequentially setting candidate regions of the image according to types of subjects, detecting at least one of the subjects from the candidate regions, creating a synthesized image by mapping a virtual object to a position corresponding to a position of the detected subject in the image, and displaying the synthesized image to a user.

## Description

### Field of the Invention

Certain embodiments of the present invention relate to Augmented Reality (AR). For example, certain embodiments of the present invention provide a three-dimensional (3D) camera pose tracking method for simultaneously recognizing various subjects through a camera and tracking the recognized subjects in real time in a 3D space.

### Background to the Invention

Augmented Reality (AR) is a virtual reality technique that combines a real world image (e.g. a view of the real world as seen by a user) with virtual world, for example comprising one or more virtual objects (e.g. which may provide information), to generate (e.g. and display) one synthesized image therefrom. AR, which supplements views of the real world with a virtual world, uses a virtual environment created using computer graphics. Computer graphics may additionally be used to provide information for use in, or of relevance to, the real environment. Accordingly, AR technology allows a real environment and a virtual environment to be displayed on one screen by combining (e.g. overlapping) a 3D virtual image with a real image seen by a user, thereby allowing the user to acquire information related to the real environment.

Generally, to recognize an object based on an image captured using a camera, an object in the image is recognized using a recognition algorithm (e.g. corresponding to a type of the object). A 3D motion of the object may be tracked using a tracking algorithm. Tracking the 3D motion of the object may be performed to determine a direction in which the (real) camera views the real object to allow matching of the position of virtual content with the position of real content. Without accurate 3D tracking, virtual content may not be accurately matched. This may cause the user to feel awkward, and thus the technique may lose value as AR.

According to a technique for providing AR of the related art, a particular recognition engine typically recognizes only one particular object (e.g. a face, a character, or the like), and each recognition engine typically independently applies a separate recognition and tracking algorithm.

Moreover, in techniques of the related art, both a recognition algorithm and a tracking algorithm need to be developed for recognition of an additional type of object. Furthermore, the additional recognition engine for the additional type of object typically has to be connected to existing recognition engines in parallel. Also, some types of objects, such as a character, may be recognized but difficult to track. Accordingly, there is a need for an improved apparatus and method, for example for simultaneously recognizing various subjects captured using a camera and tracking the recognized subjects in real time in a 3D space.

The above information is presented as background information only to assist with an understanding of the present invention. No determination has been made, and no assertion is made, as to whether any of the above might be applicable as prior art with regard to the present invention.

### Summary of the Invention

It is an aim of certain embodiments of the present invention to address, solve, mitigate or obviate, at least partly, at least one of the problems and/or disadvantages associated with the related art, for example at least one of the problems and/or disadvantages described herein. Certain embodiments of the present invention aim to provide at least one advantage over the related art, for example at least one of the advantages described herein.

Accordingly, certain embodiments of the present invention provide a method for improving the efficiency of development in which object recognition engines have plug-in structures, respectively, to organically operate in a manual or automatic manner, and tracking of an object is generalized with three-dimensional (3D) scene tracking, such that only a recognition algorithm needs to be developed for an added object.

In accordance with an aspect of the present invention, there is provided a method for creating a synthesized image (e.g. providing Augmented Reality (AR)), the method comprising the steps of: acquiring an image; setting (e.g. sequentially setting) regions (e.g. candidate regions) of the image according to types of subjects; detecting at least one of the subjects from the candidate regions; creating a synthesized image by mapping a virtual object to a position corresponding to a position of the detected subject in the image. In certain exemplary embodiments, the method may comprise the further step of displaying the synthesized image to a user.

In accordance with another aspect of the present invention, there is provided an apparatus (e.g. portable terminal) for synthesizing an image (e.g. providing AR), the portable terminal comprising: a camera module for acquiring an image; and a controller for setting (e.g. sequentially setting) regions (e.g. candidate regions) of the image according to types of subjects, detecting at least one of the subjects from the candidate regions; and creating a synthesized image by mapping a virtual object to a position corresponding to a position of the detected subject in the image. In an exemplary embodiment, the portable terminal further comprises a display unit for displaying the synthesized image to a user.

Another aspect of the present invention provides a computer program comprising instructions which, when executed, implement a method, system and/or apparatus, in accordance with any aspect, claim or embodiment described herein. A further aspect of the present invention provides a machine-readable storage storing such a program.

Other aspects, advantages, and salient features of the present invention will become apparent to those skilled in the art from the following detailed description, which, taken in conjunction with the annexed drawings, discloses various embodiments of the present invention.

### Brief Description of the Drawings

The above and other aspects, and features and advantages of certain exemplary embodiments and aspects of the present invention will be more apparent from the following detailed description, taken in conjunction with the accompanying drawings, in which:
FIG. 1 is a schematic block diagram of a portable terminal according to an exemplary embodiment of the present invention;
FIG. 2 is a front perspective view of a portable terminal according to an exemplary embodiment of the present invention;
FIG. 3 is a rear perspective view of a portable terminal according to an exemplary embodiment of the present invention;
FIG. 4 illustrates main components of a portable terminal for providing Augmented Reality (AR) according to an exemplary embodiment of the present invention;
FIG. 5 illustrates a recognition engine according to an exemplary embodiment of the present invention;
FIG. 6 is a flowchart of a method for providing AR according to an exemplary embodiment of the present invention;
FIG. 7 is a flowchart of a method for rough recognition according to an exemplary embodiment of the present invention;
FIGS. 8A, 8B, 9A and 9B are diagrams for describing rough recognition and fine recognition according to an exemplary embodiment of the present invention;
FIG. 10 is a flowchart of a method for tracking according to an exemplary embodiment of the present invention;
FIGS. 11A and 11B are diagrams for describing a global camera pose according to an exemplary embodiment of the present invention;
FIGS. 12A, 12B, 13A and 13B are diagrams for describing a method for estimating a global camera pose and local scene poses according to an exemplary embodiment of the present invention; and
FIGS. 14A, 14B, 15A, and 15B are diagrams for describing image synthesis using tracking information according to an exemplary embodiment of the present invention.

Throughout the drawings, the same or similar reference numerals may be used to refer to the same or similar parts, features, elements, components, steps and/or structures.

### Description of Embodiments of the Invention

The following description of exemplary embodiments of the present invention, with reference to the accompanying drawings, is provided to assist in a comprehensive understanding of the present invention, as defined by the claims. The description includes various specific details to assist in that understanding, but these are to be regarded as merely exemplary. Accordingly, those of ordinary skill in the art will recognize that various changes and modifications of the various embodiments described herein can be made without departing from the scope of the present invention.

Descriptions of well-known functions, processes, operations, structures, features, elements and/or constructions may be omitted for clarity and conciseness, and to avoid obscuring the subject matter of the present invention.

The terms and words used in the following description and claims are not limited to the bibliographical meanings, but, are merely used to enable a clear and consistent understanding of the present invention. Accordingly, it should be apparent to those skilled in the art that the following description of various exemplary embodiments of the present invention is provided for illustration purpose only and not for the purpose of limiting the present invention, as defined by the appended claims.

It is to be understood that, throughout the description and claims of this specification, the singular forms "a," "an," and "the" include plural referents unless the context clearly dictates otherwise. Thus, for example, reference to "a component surface" includes reference to one or more of such surfaces.

While the scope of the present invention allows for various changes and embodiments, particular embodiments will be illustrated in the drawings and described below. However, the present invention is not limited to the described embodiments and should be construed as including any and all changes, equivalents, and substitutions included in the scope of the present invention.

Although ordinal numbers such as "first," "second," and so forth will be used to describe various components, those components are not limited by the terms. The ordinal terms may be used only for distinguishing one component from another component. For example, a first component may be referred to as a second component and likewise, a second component may also be referred to as a first component, without departing from the teaching of the inventive concept.

The term "and/or" used herein includes any and all combinations of one or more of the associated listed items.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or combinations thereof.

The terms used herein, including technical and scientific terms, may have the same meanings as terms that are generally understood by those skilled in the art, unless the terms are not differently defined. It should be understood that terms defined in a generally-used dictionary may have meanings coinciding with those of terms in the related technology. As long as the terms are not defined obviously, they are not ideally or excessively analyzed as formal meanings.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

In embodiments of the present invention, a terminal may comprise any suitable type of device. For example, in certain embodiments, the terminal may comprise a touch screen. In certain embodiments, the terminal may comprise, for example, a portable terminal, a mobile terminal, a communication terminal, a portable communication terminal, or a portable mobile terminal.

For example, the terminal may be a smart phone, a cellular phone, a game console, a Television (TV), a display, a vehicle head unit, a notebook computer, a laptop computer, a tablet computer, a Personal Media Player (PMP), a Personal Digital Assistant (PDA), or the like. The terminal may be implemented as a pocket-size portable communication terminal having a wireless communication function. The terminal may comprise a flexible device or a flexible display.

A representative structure of a terminal according to an exemplary embodiment of the present invention is provided in the form of a cellular phone. The skilled person will appreciate that some components of the representative structure of the terminal may be omitted, added, modified, replaced or changed in other embodiments.

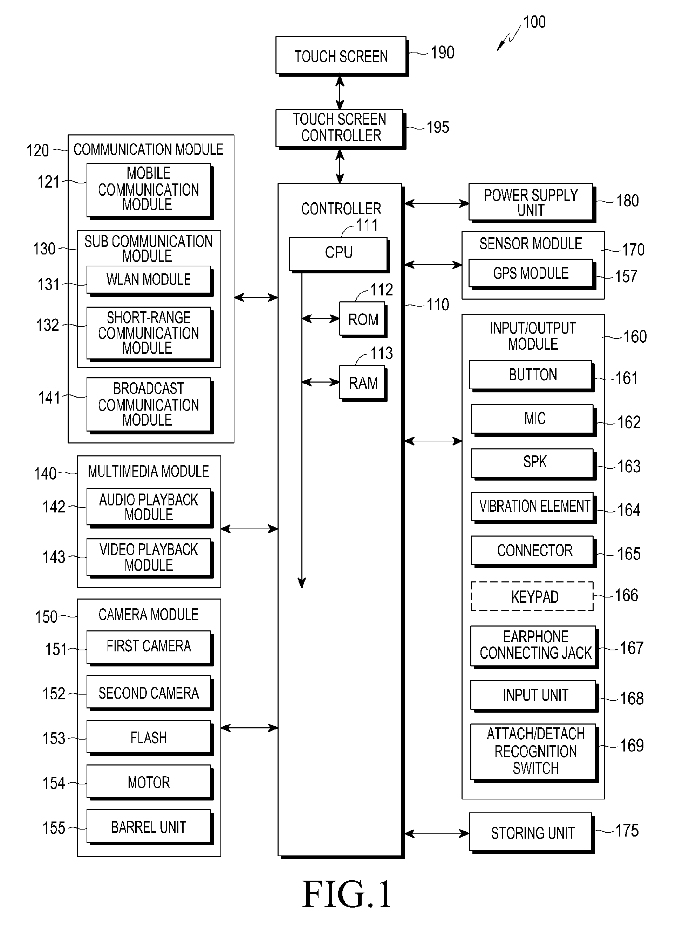

FIG. 1 is a schematic block diagram of a portable terminal according to an embodiment of the present invention.

Referring to FIG. 1, a portable terminal 100 may be connected with an external electronic device (not illustrated) by using at least one of a communication module 120, a connector 165, and an earphone connecting jack 167. The electronic device may include one of various devices which are removable from the portable terminal 100 and are connectible with the portable terminal 100 in a wired manner, such as, for example, an earphone, an external speaker, a Universal Serial Bus (USB) memory, a charging device, a cradle/dock, a Digital Multimedia Broadcasting (DMB) antenna, a mobile payment-related device, a health management device (a blood pressure monitor or the like), a game console, a vehicle navigation device, and so forth. The electronic device may include a wirelessly connectible Bluetooth communication device, a Near Field Communication (NFC) device, a WiFi Direct communication device, and a wireless Access Point (AP). The portable terminal 100 may be connected with another portable terminal or electronic device such as, for example, a cellular phone, a smart phone, a tablet Personal Computer (PC), a desktop PC, a server, or the like, in a wired or wireless manner.

Referring to FIG. 1, the portable terminal 100 includes at least one touch screen 190 and at least one touch screen controller 195. The portable terminal 100 also includes a controller 110, the communication module 120, a multimedia module 140, a camera module 150, an input/output module 160, a sensor module 170, a storing unit 175, and a power supply unit 180.

The communication module 120 includes a mobile communication module 121, a sub communication module 130, and a broadcast communication module 141.

The sub communication module 130 includes at least one of Wireless Local Area Network (WLAN) module 131 and a short-range communication module 132. The multimedia module 140 includes at least one of an audio playback module 142 and a video playback module 143. The camera module 150 includes a first camera 151 and a second camera 152. In addition, depending on the primary usage of the portable terminal 100, the camera module 150 of the portable terminal 100, according to certain exemplary embodiments of the present invention, includes at least one of a barrel unit 155 for zoom-in/zoom-out operations of the first camera 151 and the second camera 152, a motor 154 for controlling motion of the barrel unit 155 for the zoom-in/zoom-out operations of the barrel unit 155, and a flash 153 for providing a light source for photographing. The input/output module 160 includes at least one button 161, a microphone 162, a speaker 163, a vibration element 164, the connector 165, and a keypad 166.

The controller 110 includes a Read Only Memory (ROM) 112 in which a control program for controlling the portable terminal 100 is stored, and a Random Access Memory (RAM) 113, which memorizes a signal or data input from the portable terminal 100 or is used as a memory region for a task performed in the portable terminal 100. A Central Processing Unit (CPU) 111 may include a single core, a dual core, a triple core, or a quad core processor. The CPU 111, the ROM 112, and the RAM 113 may be interconnected through an internal bus.

The controller 110 controls the communication module 120, the multimedia module 140, the camera module 150, the input/output module 160, the sensor module 170, the storing unit 175, the power supply unit 180, the touch screen 190, and the touch screen controller 195.

The controller 110 senses a user input generated when a touchable user input means, such as an input unit 168, the user's finger, or the like touches one of a plurality of objects or items displayed on the touch screen 190, approaches the object, or is disposed in proximity to the object. The controller 110 also identifies the object corresponding to the position on the touch screen 190 where the user input is sensed. The user input generated through the touch screen 190 includes one of a direct touch input for directly touching an object and a hovering input, which is an indirect touch input in which the object is approached within a preset recognizing distance but not directly touched. For example, when the input unit 168 is positioned close to the touch screen 190, an object positioned immediately under the input unit 168 may be selected. In certain exemplary embodiments of the present invention, the user input may include a gesture input generated through the camera module 150, a switch/button input generated through the at least one button 161 or the keypad 166, and a voice input generated through the microphone 162 as well as the user input generated through the touch screen 190.

The object or item (or a function item) is displayed on the touch screen 190 of the portable terminal 100, and includes at least one of, for example, an application, a menu, a document, a widget, a picture, a moving image, an e-mail, a Short Messaging Service (SMS) message, a Multimedia Messaging Service (MMS) message. The object may be selected, executed, deleted, canceled, stored, changed, or the like using the user input means. The item may be used as a concept including a button, an icon (or a shortcut icon), a thumbnail image, or a folder including at least one object in the portable terminal 100. The item may be presented in the form of an image, a text, or the like.

The shortcut icon is an image displayed on the touch screen 190 of the portable terminal 100 for quick execution of an application, a call, a contact number, a menu, or the like. Upon input of a command or a selection for executing the shortcut icon, a corresponding application is executed.

The controller 110 senses a user input event, such as a hovering event, when the input unit 168 approaches the touch screen 190 or is disposed in proximity to the touch screen 190.

Upon generation of a user input event with respect to a certain item or manner, the controller 110 performs a program operation corresponding to the generated user input event.

The controller 110 may output a control signal to the input unit 168 or the vibration element 164. The control signal may include information about a vibration pattern. Either the input unit 168 or the vibration element 164 generates a vibration corresponding to the vibration pattern. The information about the vibration pattern may indicate either the vibration pattern or an identifier corresponding to the vibration pattern. The control signal may include a vibration generation request alone.

The portable terminal 100 may include at least one of the mobile communication module 121, the WLAN module 131, and the short-range communication module 132.

The mobile communication module 121 may facilitate the connection between the portable terminal 100 and an external device through mobile communication by using one or more antennas (not illustrated) under control of the controller 110. The mobile communication module 121 transmits/receives a wireless signal for a voice call, a video call, a text message (i.e., SMS), and/or a multimedia message (i.e., MMS) with a cellular phone (not illustrated), a smart phone (not illustrated), a tablet PC, or another electronic device (not illustrated) which has a phone number input into the portable terminal 100.

The sub communication module 130 includes at least one of the WLAN module 131 and the short-range communication module 132. Alternatively, the sub communication module 130 may include either the WLAN module 131 or the short-range communication module 132, or both.

The WLAN module 131 may be connected to the Internet in a place where a wireless AP (not illustrated) is installed, under control of the controller 110. The WLAN module 131 supports the wireless LAN standard IEEE 802.11x of the Institute of Electrical and Electronics Engineers (IEEE). The short-range communication module 132 may wirelessly perform short-range communication between the portable terminal 100 and an external electronic device under control of the controller 110. The short-range communication may include Bluetooth, infrared data association (IrDA), WiFi-Direct communication, NFC communication, or the like.

Through the sub communication module 130, the controller 110 may transmit a control signal for a vibration pattern to the input unit 168.

The broadcast communication module 141 receives a broadcast signal (for example, a TV broadcast signal, a radio broadcast signal, or a data broadcast signal) and broadcast additional information (for example, Electronic Program Guide (EPG) or Electronic Service Guide (ESG)) transmitted from a broadcasting station (not shown) via a broadcast communication antenna (not illustrated) under control of the controller 110.

The multimedia module 140 includes the audio playback module 142 or the video playback module 143, or both. The audio playback module 142 may play a digital audio file (for example, a file having a file extension such as 'mp3', 'wma', 'ogg', or 'wav') stored in the storing unit 175 or received under control of the controller 110. The video playback module 143 may play a digital video file (for example, a file having a file extension such as 'mpeg', 'mpg', 'mp4', 'avi', 'mov', or 'mkv') stored or received under control of the controller 110.

The multimedia module 140 may be integrated into the controller 110.

The camera module 150 includes the first camera 151 and the second camera 152 which capture a still or video image under control of the controller 110. The camera module 150 also includes the barrel unit 155 for performing the zoom-in/zoom-out operations for photographing, the motor 154 for controlling motion of the barrel unit 155, and the flash 153 for providing an auxiliary light source necessary for photographing. The first camera 151 may be positioned on the front surface of the portable terminal 100, and the second camera 152 may be positioned on the rear surface of the portable terminal 100.

The first camera 151 and the second camera 152 each include a lens system, an image sensor, and so forth. The first camera 151 and the second camera 152 convert an optical signal (input or captured) through the lens systems into an electric image signal and output the electric image signal to the controller 110. The user may capture a moving image or a still image through the first camera 151 and the second camera 152.

The input/output module 160 includes the at least one button 161, the microphone 162, the speaker 163, the vibration element 164, the connector 165, the keypad 166, the earphone connecting jack 167, and the input unit 168. However, it should be noted that the input/output module 160 is not limited to those examples, and a cursor control such as, for example, a mouse, a track ball, a joy stick, or a cursor direction key may be provided to control movement of a cursor on the touch screen 190.

The buttons 161 may be formed on at least one of a front surface, a side surface, and a rear surface of a housing (or case) of the portable terminal 100, and may include at least one of a power/lock button, a volume button, a menu button, a home button, a back button, a search button, and the like.

The microphone 162 receives a voice or other sound and generates a corresponding electric signal under control of the controller 110.

The speaker 163 outputs sound corresponding to various signals or data (for example, wireless data, broadcast data, digital audio data, digital video data, or the like) under control of the controller 110. The speaker 163 may output sound corresponding to a function executed by the portable terminal 100 (for example, button manipulation sound corresponding to a phone call, a ring back tone, or voice of a counterpart user). One or more speakers 163 may be formed in a proper position or proper positions of the housing of the portable terminal 100.

The vibration element 164 converts an electric signal into mechanical vibration under control of the controller 110. For example, in the portable terminal 100, in a vibration mode, if a voice call or a video call from another device (not illustrated) is received, the vibration element 164 operates. One or more of the vibration element 164 may be disposed in the housing of the portable terminal 100. The vibration element 164 may operate in response to user input generated through the touch screen 190.

The connector 165 may be used as an interface for connecting the portable terminal 100 with an external device (not illustrated) or a power source (not illustrated). Under control of the controller 110, data stored in the storing unit 175 of the portable terminal 100 may be transmitted to an external electronic device or data may be received from the external electronic device through a wired cable connected to the connector 165. The portable terminal 100 may receive power from the power source through the wired cable connected to the connector 165 or may charge a battery (not illustrated) by using the power source.

The keypad 166 receives key input from the user for control of the portable terminal 100. The keypad 166 includes a physical keypad (not illustrated) formed in the portable terminal 100 or a virtual keypad (not illustrated) displayed on the touch screen 190. The physical keypad (not illustrated) formed in the mobile portable terminal 100 may be excluded according to the capability or structure of the portable terminal 100.

An earphone (not illustrated) may be inserted into the earphone connecting jack 167 to be connected to the portable terminal 100.

The input unit 168 may be inserted into the portable terminal 100 for keeping, and when being used, may be withdrawn or separated from the portable terminal 100. In a region of an inner side of the portable terminal 100 into which the input unit 168 is inserted, an attach/detach recognition switch 169 is disposed to provide a signal corresponding to attachment or detachment of the input unit 168 to the controller 110. The attach/detach recognition switch 169 may be configured to directly or indirectly contact the input unit 168 when the input unit 168 is mounted. Thus, the attach/detach recognition switch 169 generates the signal corresponding to attachment or separation of the input unit 168 (that is, a signal for indicating the attachment or detachment of the input unit 168) based on whether it contacts the input unit 168, and outputs the signal to the controller 110.

The sensor module 170 includes at least one sensor for detecting a state of the portable terminal 100. For example, the sensor module 170 may include at least one of a proximity sensor for detecting the user's proximity with respect to the portable terminal 100, an illumination sensor (not illustrated) for detecting an amount of light around the portable terminal 100, a motion sensor (not illustrated) for detecting an operation of the portable terminal 100 (for example, rotation of the portable terminal 100 or acceleration or vibration applied to the portable terminal 100), a geo-magnetic sensor (not illustrated) for detecting a point of the compass by using the Earth's magnetic field, a gravity sensor for detecting a working direction of gravity, an altimeter for measuring an atmospheric pressure to detect an altitude, a Global Positioning System (GPS) module 157, and the like.

The GPS module 157 receives electric waves from a plurality of GPS satellites (not illustrated) in the Earth's orbit, and calculates a location of the portable terminal 100 by using a time of arrival from the GPS satellites (not illustrated) to the portable terminal 100.

The storing unit 175 stores a signal or data which is input/output corresponding to operations of the communication module 120, the multimedia module 140, the input/output module 160, the sensor module 170, or the touch screen 190, under control of the controller 110. The storing unit 175 may also store a control program and applications for control of the portable terminal 100 and/or the controller 110.

The term "storing unit" includes the storing unit 175, the ROM 112 and the RAM 113 in the controller 110, or a memory card (not illustrated) mounted in the portable terminal 100 (for example, a Secure Digital (SD) card, a memory stick, etc.). The storing unit 175 may include a non-volatile memory, a volatile memory, a Hard Disk Drive (HDD), a Solid State Drive (SSD), or the like.

The storing unit 175 may also store applications of various functions such as navigation, video communication, games, an alarm application based on time, and the like, images for providing a Graphic User Interface (GUI) related to the applications, user information, documents, databases or data related to a method for processing touch inputs, background images (e.g., a menu screen, a standby screen, and so forth), operation programs necessary for driving the portable terminal 100, images captured by the camera module 150, and the like.

The storing unit 175 may store data associated with a method for providing Augmented Reality (AR).

The storing unit 175 is a machine, such as, for example, a non-transitory computer-readable medium. The term "machine-readable medium" includes a medium for providing data to the machine to allow the machine to execute a particular function. The storing unit 175 may include non-volatile media or volatile media. Such a medium needs to be of a tangible type so that commands stored in the medium can be detected by a physical tool of the machine which reads the commands.

The machine-readable medium may include, but is not limited to, at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), a flash EPROM, and the like.

The power supply unit 180 supplies power to one or more batteries disposed in the housing of the portable terminal 100 under control of the controller 110. The one or more batteries supply power to the portable terminal 100. The power supply unit 180 may also supply power input from an external power source through the wired cable connected with the connector 165 to the portable terminal 100. The power supply unit 180 may also supply power, which is wirelessly input from an external power source using a wireless charging technique, to the portable terminal 100.

The portable terminal 100 includes the touch screen 190 which provides a user graphic interface corresponding to various services (for example, call, data transmission, broadcasting, picture taking) to users.

The touch screen 190 outputs an analog signal, which corresponds to at least one input to the user graphic interface, to the touch screen controller 195.

The touch screen 190 receives at least one user input using a user's body (for example, a finger including a thumb) or the input unit 168 (for example, a stylus pen or an electronic pen).

The touch screen 190 also receives a continuous movement of one touch (i.e., a drag input). The touch screen 190 outputs an analog signal corresponding to the received continuous movement of the touch to the touch screen controller 195.

In certain exemplary embodiments of the present invention, a touch may also include a non-contact touch (for example, when the user input means is positioned within a distance of, for example, 1 cm) in which the user input means may be detected without a direct contact with the touch screen 190. The touch may also include a direct contact between the touch screen 190 and a finger or the input unit 168. A distance or interval from the touch screen 190 within which the user input means may be detected may be changed according to the capability or structure of the portable terminal 100. As an example, to separately detect a direct touch event based on a contact with the user input means and an indirect touch event (i.e., a hovering event), the touch screen 190 may be configured to output different values (for example, an analog voltage value or current value) for the direct touch event and the hovering event.

The touch screen 190 may be implemented as, for example, a resistive type, a capacitive type, an infrared type, an acoustic wave type, or a combination thereof.

In an embodiment, the touch screen 190 may include at least two touch panels capable of sensing a touch, an approach of a finger, or the input unit 168 to receive inputs generated by the finger or the input unit 168. The at least two touch panels provide different output values to the touch screen controller 195. Thus, the touch screen controller 195 differently recognizes the values input from the at least two touch screen panels to identify whether the input from the touch screen 190 is the input generated by the finger or by the input unit 168.

The touch screen controller 195 converts the analog signal received from the touch screen 190 into a digital signal and transmits the digital signal to the controller 110. The controller 110 controls the touch screen 190 by using the digital signal received from the touch screen controller 195. For example, the controller 110 may control a shortcut icon (not illustrated) displayed on the touch screen 190 to be selected or executed in response to a direct touch event or a hovering event. The touch screen controller 195 may be included in the controller 110.

The touch screen controller 195, by detecting a value (for example, an electric-current value) output through the touch screen 190, recognizes a hovering interval or distance as well as a user input position and converts the recognized distance into a digital signal (for example, a Z coordinate), which it then sends to the controller 110. The touch screen controller 195 may also, by detecting the value output through the touch screen 190, detect a pressure applied by the user input means to the touch screen 190, convert the detected pressure into a digital signal, and provide the digital signal to the controller 110.

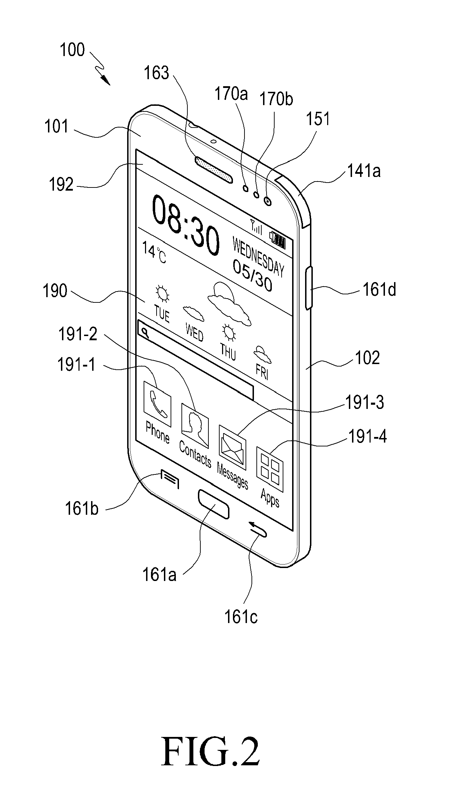

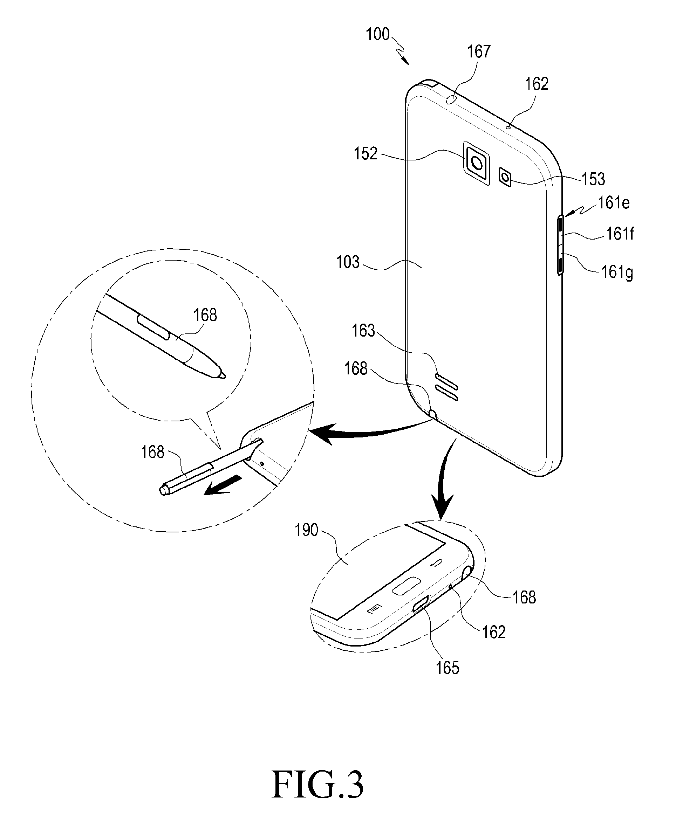

FIG. 2 is a front perspective view of the portable terminal according to an embodiment of the present invention, and FIG. 3 is a rear perspective view of a portable terminal according to an embodiment of the present invention.

Referring to FIGS. 2 and 3, the touch screen 190 is disposed in the center of a front surface 101 of the portable terminal 100. The touch screen 190 may be large enough to occupy most of the front surface 101 of the portable terminal 100. FIG. 2 shows an example in which a main home screen is displayed on the touch screen 190. The main home screen is an initial screen displayed on the touch screen 190 when the portable terminal 100 is powered on. When the portable terminal 100 has different home screens of several pages, the main home screen may be the first home screen among the several pages of home screens. Shortcut icons 191-1, 191-2, and 191-3 for executing frequently used applications, a main menu change key 191-4, time, weather, and so forth may be displayed on the home screen. If the user selects the main menu change key 191-4, a menu screen is displayed on the touch screen 190. A status bar 192 indicating a state of the portable terminal 100, such as a battery charge state, a strength of a received signal, a current time, and the like may be formed in an upper portion of the touch screen 190.

In a lower portion of the touch screen 190, a home button 161a, a menu button 161b, and a back button 161c may be disposed.

The home button 161 a is intended to display the main home screen on the touch screen 190. For example, when any home screen, which is different from the main home screen, or a menu screen is displayed on the touch screen 190, the main home screen may be displayed on the touch screen 190 upon selection of the home button 161a. If the home button 161a is selected during execution of applications on the touch screen 190, the main home screen illustrated in FIG. 2 may be displayed on the touch screen 190. The home button 161a may be used to display recently used applications or a task manager on the touch screen 190.

The menu button 161b provides a connection menu which may be displayed on the touch screen 190. The connection menu may include, for example, a widget add menu, a background change menu, a search menu, an edit menu, an environment setting menu, and the like.

The back button 161c may be used to display a screen which was displayed immediately before the currently executed screen or to terminate the most recently used application.

The first camera 151, an illumination sensor 170a, and a proximity sensor 170b may be disposed on an edge of the front surface 101 of the portable terminal 100. The second camera 152, the flash 153, and the speaker 163 may be disposed on a rear surface 103 of the portable terminal 100.

A power/lock button 161 d, a volume button 161e including a volume-up button 161f and a volume-down button 161g, a terrestrial DMB antenna 141a for broadcasting reception, and one or more microphones 162 may be disposed on a lateral surface 102 of the portable terminal 102. The DMB antenna 141a may be fixed to or removable from the portable terminal 100.

The connector 165, in which multiple electrodes are formed and may be connected with an external device in a wired manner, may be formed in a lower-end lateral surface of the portable terminal 100. The earphone connecting jack 167, into which the earphone may be inserted, may be formed in an upper-end lateral surface of the portable terminal 100.

The input unit 168, which may be stored by being inserted into the portable terminal 100 and may be withdrawn and separated from the portable terminal 100 for use, may be mounted/formed on the lower-end lateral surface of the portable terminal 100.

Certain embodiments of the present invention provide AR which synthesizes a virtual object with a real image and a real-time image captured by the camera module 150.

The controller 110 controls the overall operation of the portable terminal 100 as well as other components in the portable terminal 100 to perform the disclosed method for providing AR.

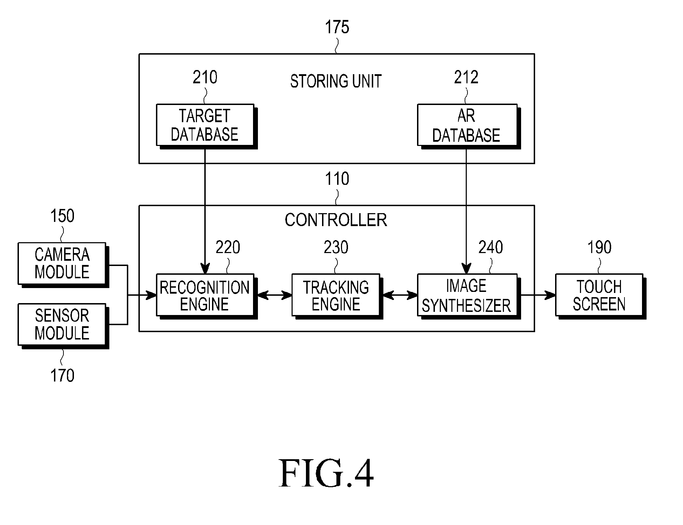

FIG. 4 illustrates main components of a portable terminal for providing AR according to an embodiment of the present invention.

Referring to FIG. 4, components of the portable terminal 100 include the camera module 150, the sensor module 170, the storing unit 175, the controller 110, and the touch screen 190.

The camera module 150 captures images of the surrounding environment of the portable terminal 100 and outputs the captured images to the controller 110.

The sensor module 170 outputs a sensing value indicating an orientation or movement of the portable terminal 100 to the controller 110.

The storing unit 175 includes a target database 210 that stores data or information regarding a subject that is a recognition target and an AR database 212 that stores data or information regarding a virtual object to be synthesized with a real image. The data regarding the subject may include a subject image, feature point (also called a feature image or a feature pattern) information of the subject image, or the like. The feature point may be an edge, a corner, an image pattern, or a contour. The data regarding the virtual object may include an image, a text, a moving image, position information of the virtual object, mapping information with the subject, or the like. The mapping information may include an identifier indicating a subject to which the virtual object is to be mapped or overlaid, a subject's name, or the like.

The controller 110 includes a recognition engine 220, a tracking engine 230, and an image synthesizer 240. The controller 110 recognizes a subject based on an image captured by the camera module 150. The controller 110 recognizes the subject in an input image using a recognition algorithm corresponding to a type of the subject, and tracks a three-dimensional (3D) motion of the subject using a tracking algorithm. Tracking the 3D motion of the subject is a technique for AR, such that the controller 110 mathematically specifies a direction in which the camera module 150 actually views the real subject, and maps the virtual object (that is, a virtual image or virtual content) to the subj ect.

The controller 110 detects a subject registered in the target database 210 from an input image by using an algorithm such as Scale Invariant Feature Transform (SIFT), Speeded Up Robust Features (SURF), or the like, and applies a template-based matching method to the detected subject to estimate a local scene pose or camera pose. SIFT is disclosed in "Object recognition from local scale-invariant features" of Lowe, David G. (1999) (Proceedings of the International Conference on Computer Vision. 2. pp. 11501157. doi:10.1109/ICCV.1999.790410), and SURF is disclosed in "SURF: Speeded Up Robust Features" of Bay, H., Tuytelaars, T., Gool, L.V. (Proceedings of the ninth European Conference on Computer Vision, May 2006). Estimating the local scene pose or camera pose using the template-based matching method is disclosed in "Real Time Detection and Tracking for Augmented Reality on Mobile Phones" of Daniel Wagner, Gerhard Reitmayr, Alessandro Mulloni, Tom Drummond, Dieter Schmalstieg (Visualization and Computer Graphics, Aug 2009). The controller 110 may also detect the subject registered in the target database 210 from the input image and estimate the local scene pose or camera pose based on two-dimensional (2D) or 3D subject information stored in the target database 210.

The recognition engine 220 recognizes the subject in the input image. The recognition engine 220 may refer to the target database 210 for such recognition, and may detect an image region matched to the subject registered in the target database 210 from the input image. The recognition engine 220 may also recognize the subject without referring to the target database 210, depending on a type of the recognition target, and for example, the recognition engine 220 may recognize edge feature points and corner feature points in the input image and recognize a planar subject such as a rectangle, a circle, or a polygon defined by the edge feature points and the corner feature points.

The tracking engine 230 tracks a change in a pose (that is, position (e.g. 3D position) and orientation) of the recognized subject among the continuously captured images. The tracking engine 230 may comprise a generalized 3D scene tracking engine. The change in the pose of the subject may be caused by movement of the camera module 150 or movement of the actual subject when the camera module 150 is fixed. The tracking engine 230 outputs tracking information indicating the pose of the subject to the image synthesizer 240.

The image synthesizer 240 maps or overlays the virtual object to the input image by using the tracking information to create a synthesized image. That is, the image synthesizer 240 synthesizes the real image captured by the camera module 150 with the virtual object. The virtual object may be text, an image, a character, or the like. The image synthesizer 240 outputs the synthesized image to the touch screen 190 which displays the synthesized image on the screen.

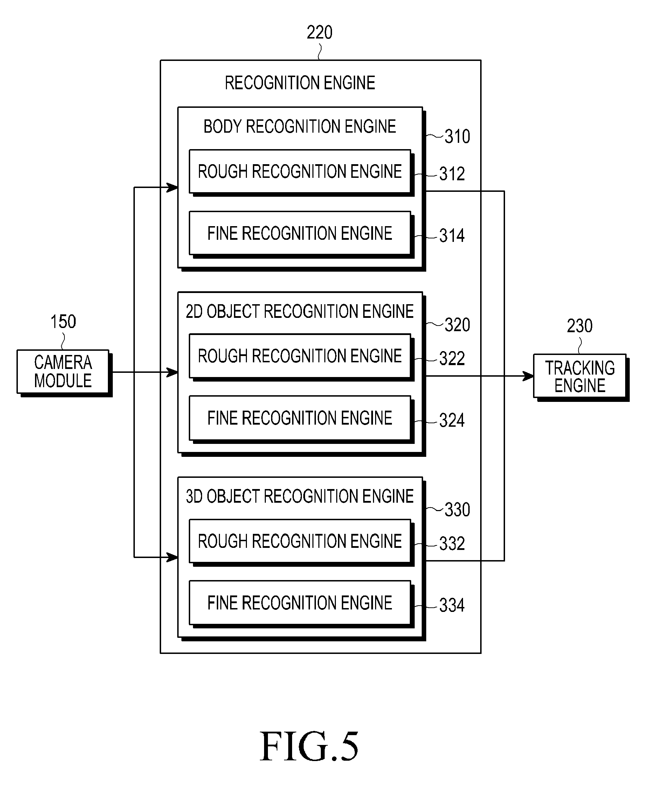

FIG. 5 illustrates a recognition engine according to an embodiment of the present invention.

Referring to FIG. 5, the recognition engine 220 includes a body recognition engine 310, a 2D object recognition engine 320, and a 3D object recognition engine 330. That is, the recognition engine 220 may be segmented into separate recognition engines corresponding to types of subjects.

The body recognition engine 310 recognizes a part of the body, such as a hand or a face, or the whole body in the input image.

The 2D object recognition engine 320 recognizes a 2D subject, such as a picture, a poster, a book cover, a map, a marker, an Optical Character Reader (OCR), or a Quick Response (QR) code, in the input image. The 2D object recognition engine 320 may be segmented into separate recognition engines, such as a 2D image recognition engine, a 2D marker recognition engine, an OCR recognition engine, and a QR code recognition engine, corresponding to types of 2D subjects.

The 3D object recognition engine 330 recognizes an object other than a body, for example, a 3D subject such as shoes, a cellular phone, a TV, a picture frame, or the like, in the input image. The body recognition engine 310 may be integrated into the 3D object recognition engine 330, and like the 2D object recognition engine 320, the 3D object recognition engine 330 may be segmented into separate recognition engines corresponding to types of 3D subjects.

The body recognition engine 310, the 2D object recognition engine 320, and the 3D object recognition engine 330 include rough recognition modules 312, 322, and 332, and fine recognition modules 314, 324, and 334.

The rough recognition modules 312, 322, and 332 are modules for determining whether a subject which a corresponding engine is intended to recognize is present in the input image, and for scanning the input image with low accuracy and at high speed. The rough recognition modules 312, 322, and 332 mask or set in the input image, as a candidate region, a region in which a probability of discovering the subject to be recognized is higher than a threshold value. The fine recognition modules 314, 324, and 334 detect the subject included in the candidate region with high accuracy and at low speed.

The recognition engine 220 according to certain exemplary embodiments of the present invention includes various separate recognition engines corresponding to types of recognition targets, and each recognition engine 310, 320, or 330 is connected to the recognition engine 220 for operation in a plug-in structure.

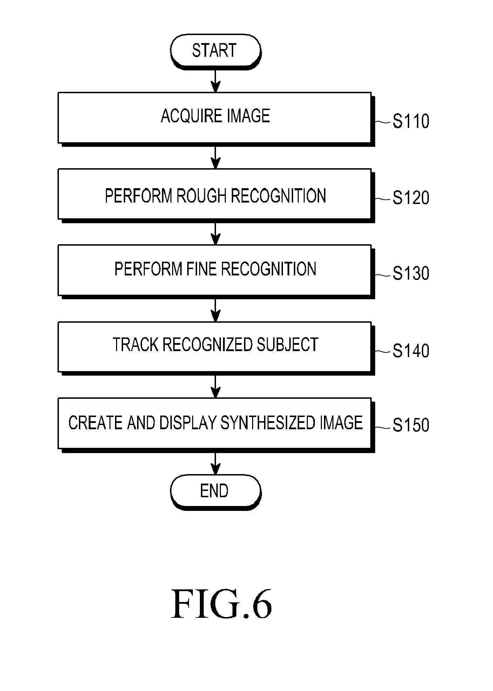

FIG. 6 is a flowchart of a method for providing AR according to an embodiment of the present invention.

Referring to FIG. 6, the method for providing AR includes at operations S110 through S150.

Operation S110 is an image acquiring operation in which the controller 110 acquires an image captured by the camera module 150 from the camera module 150 or the storing unit 175. Prior to image acquisition, the image captured by the camera module 150 may be stored in the storing unit 175.

Operation S120 is a rough recognition operation in which the recognition engine 220 of the controller 110 sets or masks in the input image, as a candidate region, a region in which a probability of existence of a subject to be recognized is higher than a threshold value. That is, the recognition engine 220 sequentially sets or masks candidate regions of the input image according to types of subjects to be recognized. Masking refers to storing position information of a candidate region in the storing unit 175, and for example, the position information may be coordinates of four corners of a rectangular candidate region or coordinates of two diagonal corners of the rectangular candidate region. For example, the recognition engine 220 searches for a first image region that is similar to a subject of a first type among the subjects in the entire region of the input image, and searches for a second image region that is similar to a subject of a second type among the subjects in the region other than the first image region in the entire region of the input image.

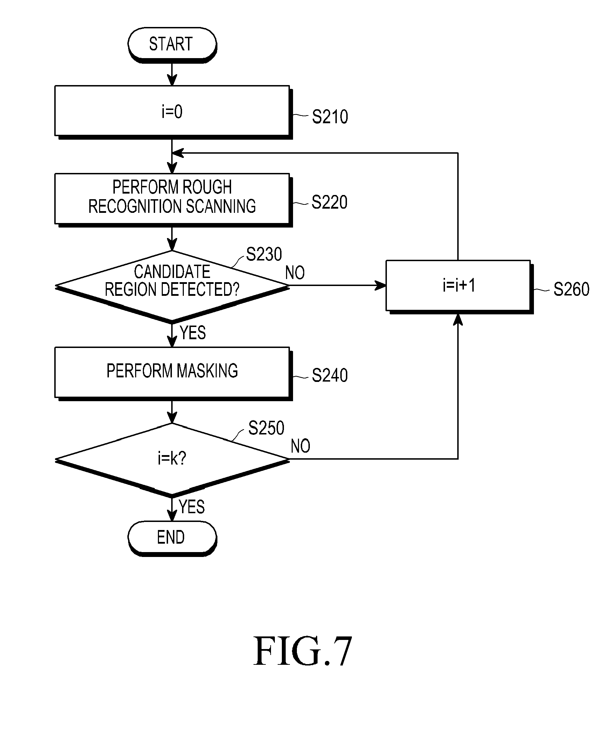

FIG. 7 is a flowchart of a method for rough recognition according to an embodiment of the present invention.

Referring to FIG. 7, the rough recognition operation includes operations S210 through S260.

Operation S210 is an operation for setting an initial value in which the recognition engine 220 of the controller 110 initializes a parameter i for preliminary recognition. The recognition engines #1 through #3 correspond to the body recognition engine 310, the 2D object recognition engine 320, and the 3D object recognition engine 330, respectively.

Operation S220 is an operation for performing rough recognition scanning in which the recognition engine i 310, 320, or 330 performs rough recognition scanning with respect to a region masked with a probability of 0 - 0.5 or a non-masked region (or a region having a probability of 0) in the input image. Rough recognition scanning is a process of searching for an image region that is similar to a subject registered in the target database 210 in the input image. That is, rough recognition scanning detects, from the input image, an image region that may not be certainly determined to be identical to a registered subject, but may be probably the registered subject.

Operation S230 is an operation for determining whether a candidate region is detected in which the recognition engine i 310, 320, or 330 determines whether the candidate region is detected from the input image. The mask region has a probability of 0 - 1. The mask region having a probability of less than 0.5 is a masked region in which a probability of existence of a subject of another type is high and which may be scanned by another recognition engine. The candidate region i is a region masked by the recognition engine i 310, 320, or 330. Once the candidate region is detected, operation S240 is performed; otherwise, if the candidate region is not detected, operation S260 is performed.

Operation S240 is a masking operation in which the recognition engine i 310, 320, or 330 sets a probability for the candidate region i.

Operation S250 is an operation for determining whether rough recognition has been completed in which it is determined whether all of the recognition engines #1 through #3 310, 320, and 330 perform rough recognition scanning. That is, the parameter i is compared with the number of recognition engines, k (in this example, 3), and if i is equal to k, preliminary recognition is ended; otherwise, if i is not equal to k, at operation S260 is performed.

Operation S260 is a parameter increasing operation in which to drive the next recognition engine, the parameter i is incremented by 1.

Referring back to FIG. 6, operation S130 is a fine recognition operation in which each candidate region is finely scanned by a corresponding recognition engine. For example, if Candidate Region 2 and Candidate Region 3 are detected, the recognition engine #2 320 finely scans Candidate Region 2 and the recognition engine #3 330 finely scans Candidate Region 3. The recognition engines 310, 320, and 330 detect a subject included in a candidate region and a local scene pose of the subject.

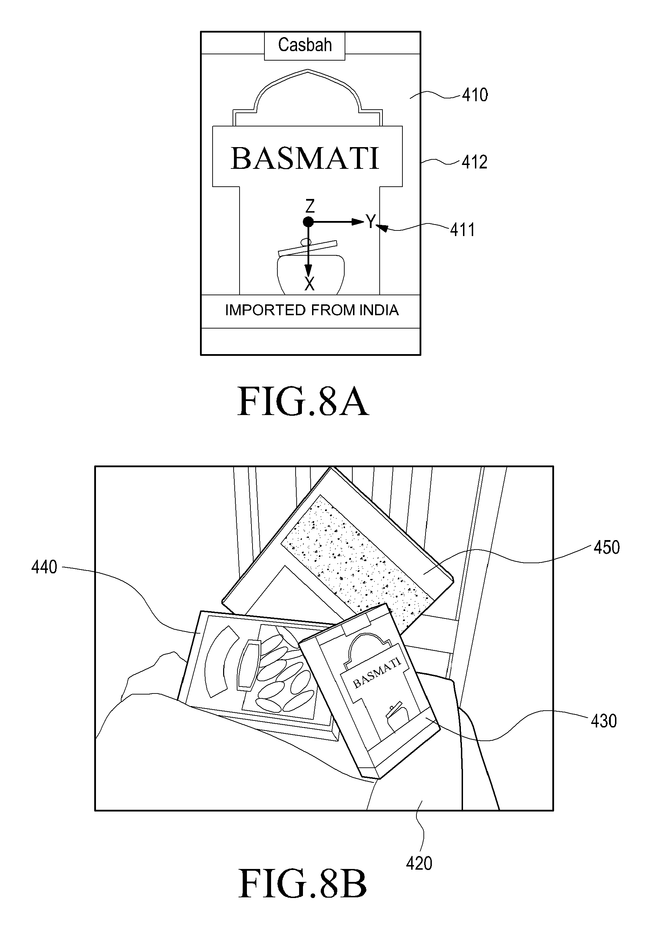

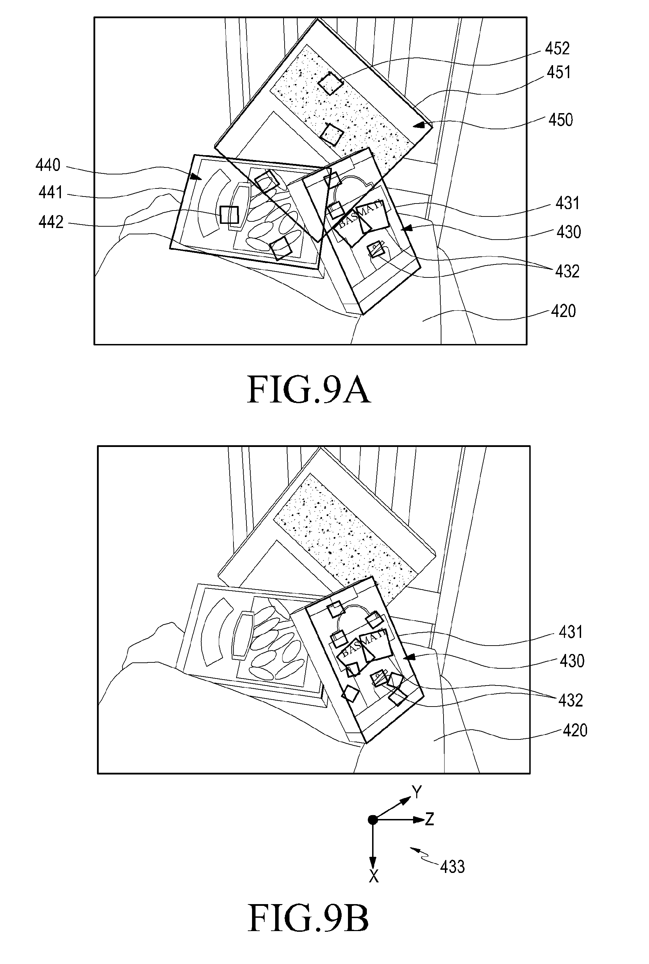

FIGS. 8A, 8B, 9A, and 9B are diagrams for describing rough recognition and fine recognition according to an embodiment of the present invention.

Referring to FIG. 8A, a 2D subject image 410 registered in the target database 210 and a contour 412 of the 2D subject image 410 are illustrated. In the current example, the 2D subject image 410 corresponds to a first box cover. The target database 210 stores information about a plurality of feature points in the 2D subject image 410. The feature points are used to match the registered 2D subject with an image region in the input image. All of the feature points are used for fine recognition and some of them are used for rough recognition. In FIG. 8A, a reference pose 411 (that is, a position and an orientation) of the first box cover which is the registered 2D subject is displayed as a 3D orthogonal coordinate system.

Referring to FIG. 8B, an input image acquired by capturing a box cover that is a recognition target is illustrated. The input image includes a table 420 and first through third box covers 430, 440, and 450 placed on the table 420.

Referring to FIG. 9A, the rough recognition module 322 of the 2D object recognition engine 320 recognizes the first through third box covers 430, 440, and 450 as candidate regions based on a number of feature points of the 2D subject image 410 including the contour 412 of the 2D subject image 410. For example, the number of feature points used for rough recognition may be set to 6, and the rough recognition module 322 may mask or recognize the first box cover 430 whose contour 431 and five feature points 432 are matched to the 2D subject image 410 as a first candidate region of a probability of 90%. The rough recognition module 322 may mask or recognize the second box cover 440 whose contour 441 and three feature points 442 are matched to the 2D subject image 410 as a second candidate region of a probability of 50%. The rough recognition module 322 may mask or recognize the third box cover 450 whose contour 451 and two feature points 452 are matched to the 2D subject image 410 as a third candidate region of a probability of 30%.

Referring to FIG. 9B, the fine recognition module 324 of the 2D object recognition engine 320 finely scans the first through third candidate regions based on all feature points of the 2D subject image 410 including the contour 412 of the 2D subject image 410. According to fine scanning, the fine recognition module 324 detects the first box cover 430 that is matched with the registered 2D subject image 410 and a local scene pose 433 of the first box cover 430 from the first candidate region. FIG. 9B illustrates the local scene pose 433 (that is, a position and an orientation) of the first box cover 430 with a 3D orthogonal coordinate system. To facilitate understanding, the 3D orthogonal coordinate system is displayed as being spaced apart from the first box cover 430, but the position of the 3D orthogonal coordinate system is set to be identical to that of the first box cover 430.

In the current example, recognition of a 2D subject is used as an example, and a 3D subject is recognized in a manner similar to that of the current example. For a 3D subject, a 3D subject image or a 3D subject model may be registered in the target database 210.

Referring back to FIG. 6, operation S 140 is a tracking operation in which the tracking engine 230 tracks a pose change (e.g., a 3D motion or movement) of the subject recognized by the recognition engine 220 among the continuously captured images.

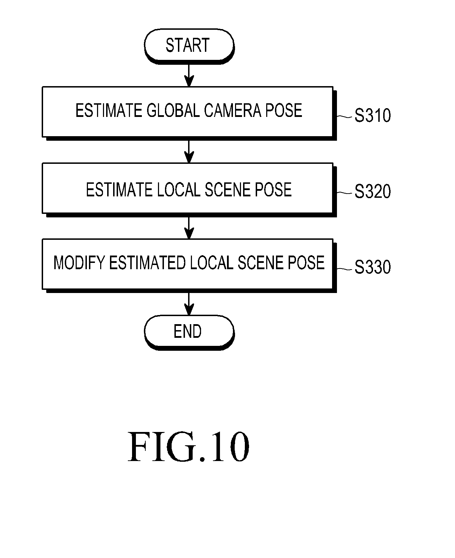

FIG. 10 is a flowchart of a method for tracking according to an embodiment of the present invention.

Referring to FIG. 10, a tracking operation includes operations S310 through S330.

Operation S310 is an operation of estimating a global camera pose in which the tracking engine 230 estimates a global camera pose of a current input image (hereinafter, a second input image) based on a first global camera pose (or a first global 3D geometrical arrangement). The first global camera pose is recognized or determined by the tracking engine 230 based on at least one previous input image (hereinafter, a first input image). The tracking engine 230 may estimate a global camera pose by using a method such as Parallel Tracking and Mapping (PTAM) that is disclosed in "Parallel tracking and mapping for small AR workspaces" of Klein, G., Murray, D. (In Proc. of ISMAR 2007, pp. 225∼234, 2007).

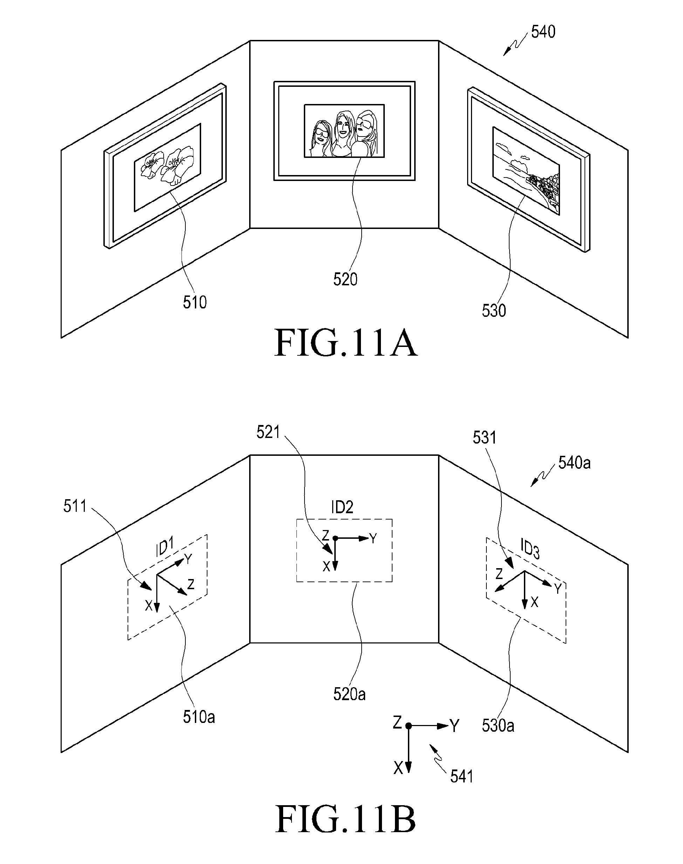

FIGS. 11A and 11B are diagrams for describing a global camera pose according to an embodiment of the present invention.

Referring to FIG. 11A, a first input image 540 including first through third subjects 510, 520, and 530 recognized by the recognition engine 220 is illustrated. In the current example, the first through third subjects 510, 520, and 530 correspond to different portrait photos.

Referring to FIG. 11B, the tracking engine 230 recognizes or determines a first global camera pose 541, that is, a first global 3D geometric arrangement indicating first 3D positions (that is, 3D coordinates) and/or first local poses (that is, 3D positions and orientations) of first through third subjects 510a, 520a, and 530a which the camera module 150 views, in a virtual space 540a corresponding to a real space that is a capturing target. The first global camera pose 541 may be indicated by a position and/or an orientation of the camera module 150 on the virtual space 540a.

The tracking engine 230 may allocate first, second, and third identifiers (ID1, ID2, and ID3 in this example) to the first, second, and third subjects 510a, 520a, and 530a, respectively. In FIG. 11B, the first global camera pose 541, a first local scene pose 511 of the first subject 510a, a first local scene pose 521 of the second subject 520a, and a first local scene pose 531 of the third subject 530a are expressed as 3D orthogonal coordinate systems. The first global camera pose 541 and each first local scene pose 511, 521, or 531 may be expressed as matrices.

The tracking engine 230 recognizes a position change and/or an orientation change of subjects in the current second input image with respect to a previous position and/or a previous orientation of the subjects in the previous first input image, thus estimating a second global camera pose of the second input image.

Referring back to FIG. 10, operation S320 is a local scene pose estimation operation in which the tracking engine 230 estimates second local scene poses of the second input image based on the second global camera pose. The tracking engine 230 estimates the local scene poses by using a method such as PTAM.

FIGSs. 12A, 12B, 13A, and 13B are diagrams for describing a method for estimating a global camera pose and local scene poses according to an embodiment of the present invention.

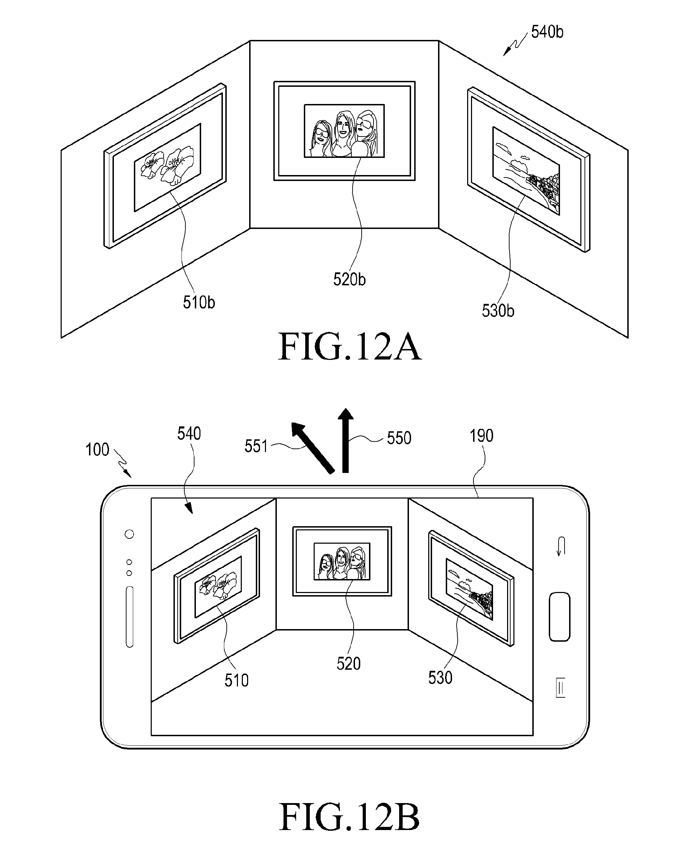

Referring to FIG. 12A, the user is in a space 540b where first through third subjects 510b, 520b, and 530b are exhibited. Referring to FIG. 12B, the user takes a photo of the front of the second subject 520b through the camera module 150 of the portable terminal 100, and the first input image 540 including the first through third subjects 510, 520, and 530 is displayed as a live preview image on the touch screen 190 of the portable terminal 100.

The user rotates the portable terminal 100 to take a photo of the front of the first subject 510b. Due to rotation of the portable terminal 100, a viewing direction of the camera module 150 is changed from a first direction 550 to a second direction 551.

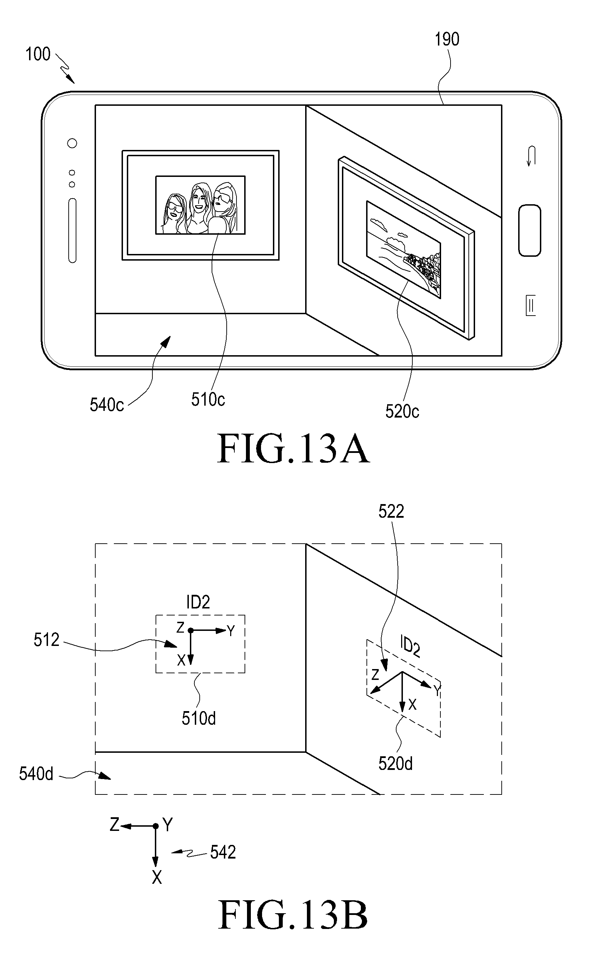

Referring to FIG. 13A, after the viewing direction of the camera module 150 is changed from the first direction 550 to the second direction 551, a second input image 540c including a first subject 510c and a second subject 520c out of the first through third subjects is displayed as a live preview image on the touch screen 190 of the portable terminal 100.

Referring to FIG. 13B, the tracking engine 230 recognizes or determines a second global camera pose 542, that is, a second global 3D geometric arrangement indicating second 3D positions and/or second local scene poses of the first subject 510d and the second subject 520d which the camera module 150 views in a virtual space 540d corresponding to a real space that is a photographing target. The tracking engine 230 recognizes or determines the second global camera pose 542 with respect to the second input image based on the first global camera pose 541. The tracking engine 230 also estimates the second local scene poses based on the second global camera pose 542.

In FIG. 13B, the second global camera pose 542, the second local scene pose 512 of the first subject 510d, and the second local scene pose 522 of the second subject 520d are expressed as 3D orthogonal coordinate systems, respectively. The second global camera pose 542 and the respective second local scene poses 512 and 522 may also be expressed as matrices.

Referring back to FIG. 10, operation S330 is an operation for modifying the estimated local scene pose in which the tracking engine 230 modifies the second local scene poses 512 and 522 estimated based on the local scene poses of the second input image recognized by the recognition engine 220. Modification or updating of the second local scene poses 512 and 522 may be performed periodically.

The tracking engine 230 outputs tracking information indicating the local scene poses of the second input image to the image synthesizer 240, and the tracking information may be tracking pose matrices corresponding to the local scene poses of the second input image.

Referring back to FIG. 6, operation S150 is an operation for creating and displaying a synthesized image in which the image synthesizer 240 creates a synthesized image by mapping or overlaying a virtual object to an input image using the tracking information. The created synthesized image is output to the touch screen 190 which displays the synthesized image to the user.

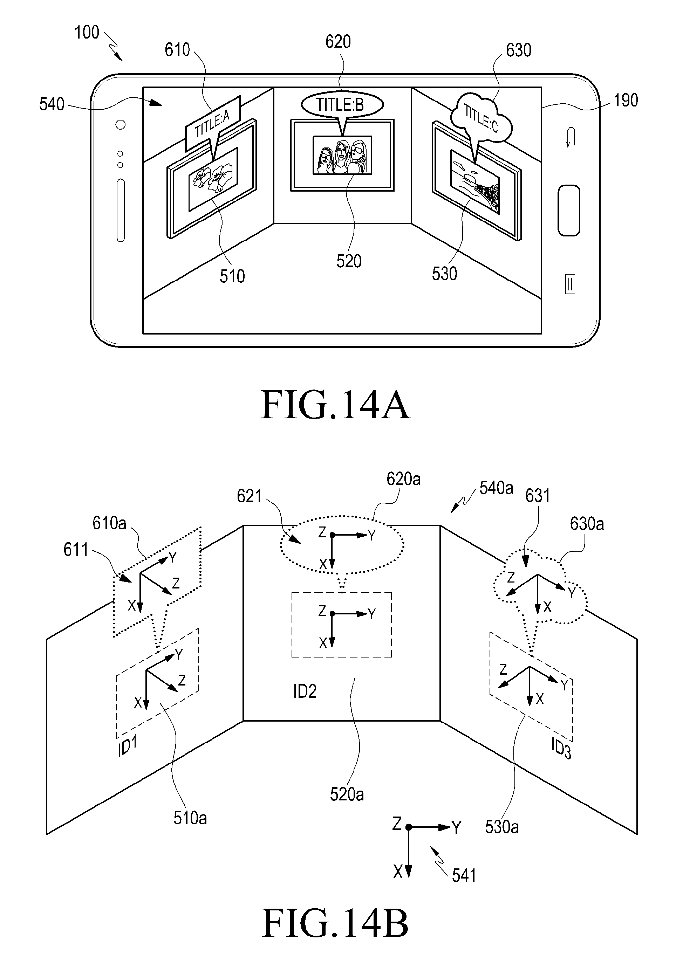

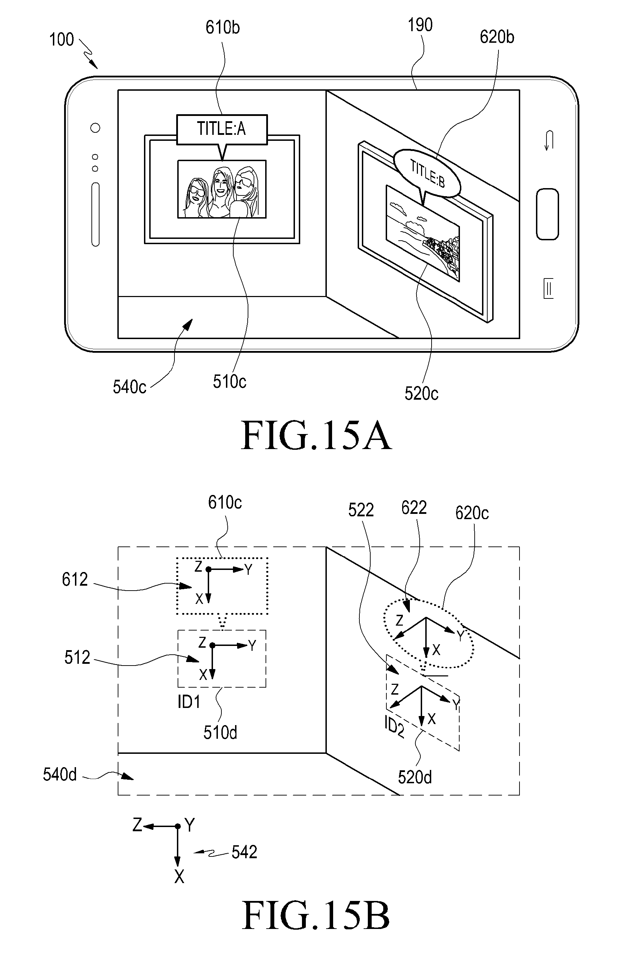

FIGS. 14A, 14B, 15A and 15B are diagrams for describing image synthesis using tracking information according to an embodiment of the present invention.

Referring to FIG. 14A, the user takes a photo of the front of the second subject with the camera module 150 of the portable terminal 100, and the first input image 540 including the first subject 510, the second subject 520, and the third subject 530 is displayed as a live preview image on the touch screen 190 of the portable terminal 100. First, second, and third objects 610, 620, and 630 which describe the first, second, and third subjects 510, 520, and 530 are mapped and displayed in the first input image 540.

Referring to FIG. 14B, the image synthesizer 240 recognizes first local scene poses 511, 521, and 531 of first, second, and third subjects 510a, 520a, and 530a in the virtual space 540a corresponding to the real space that is a photographing target based on the tracking information, and determines first poses 611, 621, and 631 (3D positions and orientations) of first, second, and third virtual objects 610a, 620a, and 630a to correspond to the first local scene poses 511, 521, and 531.

As illustrated in FIGS. 12A and 12B, the user may rotate the portable terminal 100 to take a photo of the front of the first subject. Due to rotation of the portable terminal 100, the viewing direction of the camera module 150 is changed from the first direction to the second direction.

Referring to FIG. 15A, after the viewing direction of the camera module 150 is changed from the first direction to the second direction, a second input image 540c including first and second subjects 510c and 520c out of the first through third subjects is displayed as a live preview image on the touch screen 190 of the portable terminal 100. First and second virtual objects 610b and 620b for describing the first and second subjects 510c and 520c are also mapped and displayed in the second input image 540c.

Referring to FIG. 15B, the image synthesizer 240 recognizes the second local scene poses 512 and 522 of the first and second subjects 510d and 520d in a virtual space 540d corresponding to a real space that is a photographing target based on the tracking information, and determines second poses 612 and 622 (3D positions and orientations) of first and second virtual objects 610c and 620c to correspond to the second local scene poses 512 and 522.

A pose change of the first virtual object and the second virtual object (that is, a difference between the first poses 611 and 621 and the second poses 612 and 622) may be equal to or different from a pose change of the first subject and the second subject (that is, a difference between the first local scene poses 511 and 521 and the second local scene poses 512 and 522).

As is apparent from the foregoing description of exemplary embodiments of the present invention, even for a text image that is difficult to track with a single recognition engine, the text image may be tracked by using overall 3D image information, and by developing and adding a recognition engine, tracking becomes possible, such that an efficient engine module may be added.

Although a touch screen is used as a representative example of a display unit for displaying a screen in the foregoing examples, a general display unit such as a Liquid Crystal Display (LCD) having no touch sensing function, an Organic Light Emitting Diode (OLED), or an LED may be used in place of the touch screen.

Embodiments of the present invention may be implemented in the form of hardware, software, or any combination of hardware and software. Such software may be stored in any suitable type of memory or medium, whether or not erasable or re-recordable, for example in a volatile or non-volatile storage such as a Read-Only Memory (ROM); a memory such as a Random Access Memory (RAM), a memory chip, a device, or an integrated circuit; and an optically or magnetically recordable and machine (e.g., computer)-readable storage medium such as a Compact Disc (CD), a Digital Versatile Disk (DVD), a magnetic disk, or a magnetic tape.

It can be seen that the image playback method according to certain exemplary embodiments of the present invention may be implemented by a computer or a portable terminal which includes a controller and a memory. The memory may comprise any suitable type of machine-readable storage medium which is suitable for storing one or more programs including instructions or code for implementing one or more embodiments of the present invention.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

A portable terminal according to certain exemplary embodiments of the present invention may receive and store the program from a program providing device connected in a wired or wireless manner. The program providing device may include a memory for storing a program including instructions for instructing portable terminal to execute a method (e.g. for providing AR), information (e.g. necessary for the method for providing AR), a communication unit (e.g. for performing wired or wireless communication with the portable terminal), and/or a controller (e.g. for transmitting a corresponding program to the portable terminal at the request of the portable terminal or automatically) according to any aspect, claim or embodiment described herein.

While the present invention has been shown and described with reference to various exemplary embodiments thereof, it will be understood by those skilled in the art that various changes in form and details may be made therein without departing from the scope of the present invention as defined by the appended claims.

## Claims

1. A method for providing Augmented Reality (AR), the method comprising:
acquiring an image;
sequentially setting candidate regions of the image according to types of subjects;
detecting at least one of the subjects from the candidate regions;
creating a synthesized image by mapping a virtual object to a position corresponding to a position of the detected subject in the image; and
displaying the synthesized image to a user.

2. The method of claim 1, wherein the setting of the candidate regions comprises:
detecting a first image region, which is estimated as a subject of a first type among the subjects, as a first candidate region in the image; and
detecting a second image region, which is estimated as a subject of a second type that is different from the first type of the subject among the subjects, as a second candidate region in the image.

3. The method of claim 2, wherein the setting of the candidate regions comprises:
detecting a third image region, which is estimated as a subject of a third type that is different from the first type and the second type of the subjects among the subjects, as a third candidate region in the image.

4. The method of claim 2 or 3, wherein the subject of the first type is a two-dimensional (2D) subject and the subject of the second type is a three-dimensional (3D) subj ect.

5. The method of any of claims 2 to 4, wherein probabilities of discovering corresponding subjects are set for the first candidate region and the second candidate region, respectively.

6. The method of any of claims 2 to 5, wherein the first candidate region is searched for over the entire region of the image, and the second candidate region is searched for in a region other than the first candidate region in the entire region of the image.

7. The method of any of claims 1 to 6, wherein the detecting of at least one of the subjects from the candidate regions comprises:
detecting a pose of the at least one of the subjects.

8. The method of claim 7, further comprising tracking a pose change of the detected subject among continuously captured images.

9. The method of claim 8, further comprising changing a pose of the virtual object according to the tracked pose change of the detected subject.

10. The method of claim 8 or 9, wherein the tracking of the pose change comprises:
estimating a camera pose of the detected subject; and
estimating a pose of the subject based on the camera pose.

11. The method of claim 10, further comprising:
detecting a pose of the subject; and
updating the estimated pose of the subject into the detected pose of the subject.

12. A machine-readable storage medium having recorded thereon a program for executing a method for providing Augmented Reality (AR) of any one of claims 1 through 11.

13. A portable terminal comprising a machine-readable storage medium of claim 12.

14. A portable terminal for providing Augmented Reality (AR), the portable terminal comprising:
a camera module configured to output an image;
a controller configured to sequentially set candidate regions of the image according to types of subjects, to detect at least one of the subjects from the candidate regions, and to create a synthesized image by mapping a virtual object to a position corresponding to a position of the detected subject in the image; and
a display unit configured to display the synthesized image to a user.

15. The portable terminal of claim 14, wherein the controller comprises:
a two-dimensional (2D) object recognition engine configured to detect a first image region, which is estimated as a subject of a first type among the subjects, as a first candidate region in the image; and
a three-dimensional (3D) object recognition engine configured to detect a second image region, which is estimated as a subject of a second type that is different from the first type of the subject among the subjects, as a second candidate region in the image.
